# EUROPEAN PATENT SPECIFICATION

(11) **EP 2 092 039 B1**
(45) Date of publication and mention of the grant of the patent: **06.07.2011**
(21) Application number: 07840068.6
(22) Date of filing: 16.11.2007
(51) Int. Cl.: C09K 8/80

(54) **A NEW COATING COMPOSITION FOR PROPPANT AND THE METHOD OF MAKING THE SAME**
NEUE BESCHICHTUNGSZUSAMMENSETZUNG FÜR PROPPANTS UND HERSTELLUNGSVERFAHREN DAFÜR
NOUVELLE COMPOSITION DE REVÊTEMENT POUR AGENT DE SOUTÈNEMENT ET SON PROCÉDÉ DE PRÉPARATION

(30) Priority: 19.12.2006 US 875741 P
(43) Date of publication of application: 26.08.2009
(73) Proprietor: Dow Global Technologies LLC, Midland, MI 48674 (US)
(72) Inventor: TURAKHIA, Rajesh, Lake Jackson, TX 77566 (US); VERGHESE, Nikhil, Eapen, Lake Orion, MI 48359 (US); JACOB, George, Lake Jackson, TX 77566 (US)
(74) Representative: Raynor, John
(86) International application number: PCT/US2007/024060
(87) International publication number: WO 2008/088449

(56) References cited:
- WO-A-2004/092254
- WO-A-2006/061551
- US-A- 5 381 864
- US-A1- 2003 224 165
- US-B1- 6 632 527

## Description

### BACKGROUND OF THE INVENTION

### 1. Field of the Invention

The present invention relates to proppant particulates coated with a toughened epoxy resin composition. The coated particulates exhibit enhanced toughness and can be used as a proppant in hydraulic fracturing of subterranean formations. The present invention also relates to coated proppant particulates with reduced dust formation during the handling and the transportation of the same.

### 2. Discussion of Background Information

To stimulate subterranean formations to enhance oil and gas production, fluid is pumped from the surface into an oil or gas bearing sub-surface at a rate and pressure sufficient, e.g. about 5000-7000 psi (about 35,000 kPa to about 48,000 kPa), to cause a fracture of the subterranean formations. This process is commonly referred to as hydraulic fracturing, In hydraulic fracturing process, proppant particulates are blended into fluids and injected into the formation to fill the underground fracture to maintain the fracture in the open or fractured condition. The proppants create a permeable pathway through which oil and gas can flow into the oil bore.

To prepare proppant particulates for hydraulic fracturing process, epoxy resin coatings have been used to coat proppant particulates. There are a number of patents teaching the use of epoxy coatings for proppants. Some of the patents describing the epoxy coatings are U.S. Patent No. 3,854,533, U.S. Patent No. 3,867,986, U.S. Patent No. 4,829,100, U.S. Patent No. 4,869,960, and U.S. Patent No. 5,422,183. However, the epoxy coatings on the proppants, under the pressure of about 5000-7000 psi (about 35,000 kPa to about 48,000 kPa), will disintegrate and become brittle. The fracture of the coated surface exposes the particulates proppants, such as silica sand which pulverizes at pressures of greater than 5000 psi (35,000 kPa). When pulverized, both the epoxy coating fines and the silica fines plug the permeable path thus reducing the conductivity of the pack placed between the opened subsurface fracture. The fines are generally caused by a closure stress of greater than 5000 psi (35,000 kPa) within the fractured zone and also when the proppants are passed through the pumping and mixing equipment used to introduce the proppants into the subterranean formation.

A number of approaches have been used to minimize coating proppant fracture, disintegration, and the resulting fines. U.S. Patent Publication No. 2006/0035790 and U.S. Patent No. 5,697,440 discuss the use of elastomeric coatings. U.S. Patent No. 6,172,011 discusses incorporating fibrous materials on the proppant particulates. U.S. Patent No. 5,604,I84 discloses a method for opening a subsurface fracture using chemically inert resin coated proppant particualtes. U.S. Patent Nos. 5,871,049 and 6,209,643 describe the use of a tackifying compound with the proppant particulates. U.S. Patent Publication No. 2005/0194141 discloses the use of soluble fibers in the resin coating of the proppant particulates. U.S. Patent No. 5,837,656 and U.S. Patent Publication No 2003/0224165 disclose the use of multilayer coatings on the proppant particulates. All of these teachings disclose the use of an additional raw material or an additional step in the process to minimize the generation of fines due to fracture and brittle failure of the proppant particulates under pressure.

WO/2004/092254 describes a particle comprising a particulate substrate; and a thermoplastic elastomer present on or in the substrate as an amount sufficient to improve the dust suppression of the particle above that which would occur if the thermoplastic elastomer was absent.

WO/2006/061551 describes a method of treating a subterranean formation, comprising: at least partially coating particulates with a first layer of a first curable resin and allowing the first curable resin to substantially cure; and then, at least partially coating the particulates with a second layer of a second curable resin; and allowing the second layer of the second curable resin to substantially cure; and then, slurrying the coated particulates into a treatment fluid and placing the slurry into a subterranean formation.

US 5,381,864 discloses fracturing, frac-pack, and gravel packing procedures which utilize a treating composition comprising a carrier fluid and a particulate blend. The particulate blend consists essentially of a large particulate material and a small particulate material.

US 6,632,527 describes composite particles made of a binder and filler material for use in subterranean formations and methods of making the composite particles. The filler is finely divided mineral and optional fiber. The particles are proppants useful to prop open subterranean formation fractures.

Therefore, this is a need to have an improved epoxy resin for coating the proppant particulates to minimize the coating fracture and brittle failures under high closure stress such as greater than 5000 psi (35,000 kPa).

Recently, there have been several studies related to increasing the fracture resistance or toughness of epoxy resins by adding to the epoxy resin various block copolymers as toughening agent. Much of the work is focused on the use of amphiphilic diblock copolymers having an epoxy miscible block and an epoxy immiscible block. In those studies, the epoxy miscible block is poly(ethylene oxide) ("PEO") and the immiscible block is a saturated polymeric hydrocarbon. For example, Journal of Polymer Science, Part B: Polymer Physics, 2001, 39(23), 2996-3010 discloses that the use of a poly(ethylene oxide)-b-poly(ethylene-alt-propylene) ("PEO-PEP") diblock copolymer provides micellar structures in cured epoxy systems; and that block copolymers self-assembled into vesicles and spherical micelles can significantly increase the fracture resistance of model bisphenol A epoxies cured with a tetrafunctional aromatic amine curing agent. Journal of The American Chemical Society, 1997, 119(11), 2749-2750 describes epoxy systems with self assembled microstructures brought about using amphiphilic PEO-PEP and poly(ethylene oxide)-b-poly(ethyl ethylene) ("PEO-PEE") diblock copolymers. These block copolymer containing-systems illustrate characteristics of self-assembly. Although effective at providing templated epoxies with appealing property sets, the known block copolymer materials are too expensive to be used in some applications.

Other block copolymers incorporating an epoxy-reactive functionality in one block have been used as modifiers for epoxy resins to achieve nanostructured epoxy thermosets. For example, Macromolecules, 2000, 33(26) 9522-9534 describes the use of poly(epoxyisoprene)-b-polybutadiene ("BIxn") and poly(methylacrylate-co-glycidyl methacrylate)-b-polyisoprene ("MG-I") diblock copolymers that are amphiphilic in nature and are designed in such a way that one of the blocks can react into the epoxy matrix when the resin is cured. Journal of Applied Polymer Science, 1994, 54, 815 describes epoxy systems having submicron scale dispersions of poly(caprolactone)-b-poly(dimethylsiloxane)-b-poly(caprolactone) triblock copolymers.

Other self-assembled amphiphilic block copolymers for modifying thermosetting epoxy resins to form nanostructured epoxy thermosets are known. For example, Macromolecules 2000, 33, 5235-5244 and Macromolecules, 2002, 35, 3133-3144, describe the addition of a poly(ethylene oxide)-b-poly(propylene oxide) ("PEO-PPO") diblock and a polyethylene oxide)-b-poly(propylene oxide)-b-poly(ethylene oxide) ("PEO-PPO-PEO") triblock to an epoxy cured with methylene dianiline, where the average size of the dispersed phase in the diblock-containing blends is of the order of 10-30 nm. A polyether block copolymer such as a PEO-PPO-PEO triblock is also known to be used with an epoxy resin as disclosed in JP H9-324110.

While some of the previously known diblock and triblock copolymers mentioned above are useful for improving the toughness of epoxy resins, none of them was used in proppant applications in hydraulic fracturing.

### SUMMARY OF THE INVENTION

The present invention provides coated proppant comprising a proppant particulate substrate and a coating layer on the proppant particulate substrate; wherein the coating layer is formed from a composition comprising an epoxy resin, a curing agent, an adhesion promoter, and a toughening agent, wherein the toughening agent is a block copolymer comprising an amphiphilic block copolymer having at least one epoxy resin miscible block segment and at least one epoxy resin immiscible block segment; wherein the immiscible block segment comprises at least one polyether structure containing at least one or more alkylene oxide monomer units with at least four carbon atoms.

### BRIEF DESCRIPTION OF DRAWINGS

Figure 1 is an electron micrograph illustrating resin coated sand with dust on the sand when the coating does not contain any toughening agent.
Figure 2 is an electron micrograph illustrating resin coated sand without dust on the sand when the coating contains toughening agent.
Figure 3 is a bar chart illustrating the comparison of Fracture Toughness and corresponding Tg of various Examples prepared.
Figure 4 is a bar chart illustrating a Fracture Toughness comparison of some Examples at room temperature (about 25°C) and at 125°C.

### DETAILED DESCRIPTION OF THE PRESENT INVENTION

In the following detailed description, the specific embodiments of the present invention are described in connection with its preferred embodiments. However, to the extent that the following description is specific to a particular embodiment or a particular use of the present techniques, it is intended to be illustrative only and merely provides a concise description of the exemplary embodiments. Accordingly, the invention is not limited to the specific embodiments described below, but rather; the invention includes all alternatives, modifications, and equivalents falling within the scope of the appended claims.

As used herein, unless otherwise stated, all percentages (%) are by weight based on the total weight of the composition.

The present invention provides a way to improve toughness while still maintaining other physical properties primarily glass transition temperature (T_{g}) of epoxy and other thermosetting coatings on proppant particulates. Thermosetting coatings like epoxy, phenolic, and others while providing good chemical resistance and modulus, are known to be brittle when subjected to deformation. Epoxy and phenolic resins are an important class of thermoset polymers that are extensively used in applications ranging from coatings to adhesives to composites. The crosslinked nature of these polymers provides them with many useful properties, especially a combination of thermal and chemical resistance and excellent adhesion. The properties of these thermoset coatings are influenced by the resin and the resin backbone, curing agent, and the crosslink density of the final coating. The crosslinked nature of the coatings, however, typically renders them relatively brittle. As a result, enhanced toughness is required for many applications.

The Glass Transition Temperature (Tg) also plays an important role on the final properties of the thermosetting coatings. When Tg is high, the thermoset coatings will tend to be more brittle. Most of the fully cured phenolic coatings have Tg of greater than 120°C and as high as 200°C. The Tg of typical epoxy coatings may depend upon the type of curing agent used with the epoxy resins. For example, the aliphatic amine curing agents like D.E.H. 20^{®}, also from The Dow Chemical Company, gives a Tg of an epoxy resin such as D.E.R. 383^{®} of The Dow Chemical Company of about 120°C. Cycloaliphatic amines and aromatic amines give a Tg of epoxy resins such as D.E.R. 383^{®} between 120°C and 180°C.

The fracture toughness of these thermosetting resins is improved by the addition of small amounts of block copolymers to the resin. The resin can then be mixed with curing agent, applied and cured on the proppant particulates.

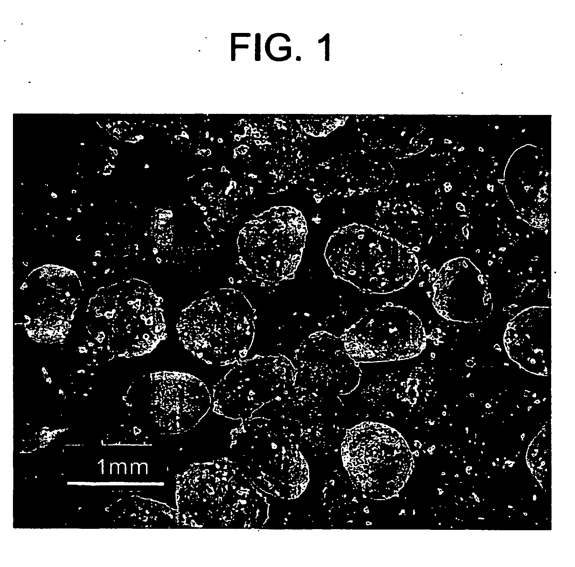

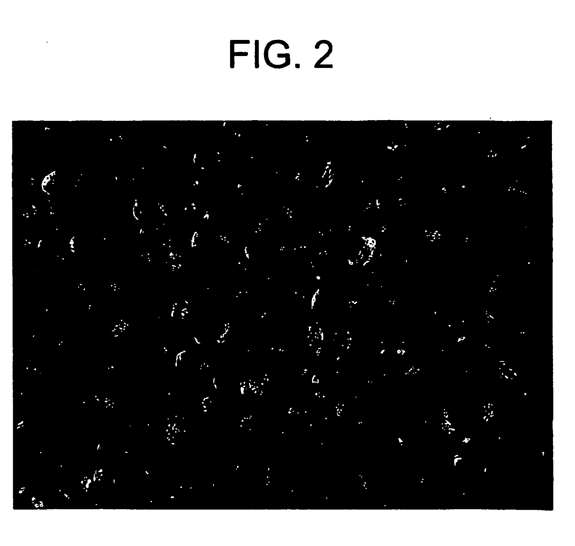

It is noted that in preparing proppant particulates coated with resins without the toughening agent, a large amount of dust is generated as shown in Figure 1. Dusting can be severe during proppants coating process and during shipment of proppants. Dusting is probably caused by the collision of the proppant particulates during the coating and transportation process. It is believed that the dust so formed comprises of the coating polymer formed as a result of the coating breaking up because of the brittle nature of the coating when toughening agent is not present in the coating. However, when toughening agent is used in the coating composition, the dusting is significantly reduced or disappears as shown in Figure 2.

The present invention provides such a coated proppant, having a toughening agent in coating, which comprises of a proppant particulate substrate and a coating layer on the substrate. The coating layer is formed from a coating composition which comprises a resin, a curing agent, an adhesion promoter, and a toughening agent.

The particulate substrate of the present invention may be one or more of sand, silica particles, ceramic particles, metallic particles, synthetic organic particles and mixture thereof. The sizes of these particulate substrates are usually from about 20 to about 200 mesh (about 75 to about 840 microns).

In the coating composition of the present invention, the resin may be an epoxy resin or a mixture of an epoxy resin and a phenolic resin. Once cured, the coating will contain a cross-linked thermoset resin. In one embodiment, the epoxy resin is a diglycidyl-ether of Bisphenol A epoxy resin, diglycidyl-ether of Bisphenol F epoxy resin, or epoxy novolac resin. In another embodiment, the epoxy resin is a diglycidyl ether of cycloaliphatic epoxy resin.

In the coating composition, the curing agent may be one or more of a) an aliphatic or modified aliphatic amine, b) aromatic amine, c) a cycloaliphatic or modified cyclophatic amine, d) an anhydride, e) Lewis acid like boron triflouride or f) a hexamethylenetetramanine compound.

In the coating composition, the toughening agent is a block copolymer comprising an amphiphilic block copolymer which contains at least one epoxy resin miscible block segment and at least one epoxy resin immiscible block segment. The immiscible block segment comprises at least one polyether structure provided that the polyether structure of the immiscible block segment contains at least one or more alkylene oxide monomer units having at least four carbon atoms.

In one preferred embodiment of the present invention, XU 19110 epoxy resin from The Dow Chemical Company is used. The XU 19110 is a toughened liquid epoxy resin and contains a standard Bisphenol-A epoxy resin blended with a toughening agent. This product is a blend of about 95 wt% standard Bisphenol-A epoxy resins and about 5 wt.% of toughening agent such as amphibilic block copolymer. The EEW value of XU 19110 is between 192-202 measured with ASTM D-1652.

The coating composition may contain from about 1 to about 20 wt. %, preferably from about 1 to about 10 wt. %, and more preferably from about 1 to about 5 wt. % of toughening agent as a distinct phase from the composition. The distinct phase is referred to as a second phase.

The coating composition of the present invention may further comprise an adhesion promoter such as organo-silanes (example Z-6011^{®} from Dow Corning). The coating composition may comprise from about 0.05 to about 2 wt. % and most preferably from about 0.1 to about 0.5 wt. % of one or more adhesion promoters.

The coating composition of the present invention may further comprise a surfactant such as 3M™ Novec™ Fluorosurfactant FC-4430. In preferred embodiments, the surfactant may be one or more of anionic or nonionic surfactants at less than about I wt.% of the composition.

The present invention provides some unique properties of a coated proppant particulate suitable for application in subsurface fracture environment. For example, the coating layer of the coated proppant particulate has a glass transition temperature above about 120°C and fracture toughness (K_{lc}) from about 0.6 to about 2.5 MPa.m^{1/2}.

The coating composition of the present invention is usually cured at a temperature between about 50 to about 300°C, preferably at a temperature between about 75 to about 275 °C, and more preferably at a temperature between about 100 to about 250 °C.

In one preferred embodiment, the coating composition comprises about 60 to about 90 wt. % of an epoxy resin, about 10 to about 25 wt% of a curing agent, and about 1 to about 20 wt. % of a block copolymer.

Without the need for further elaboration, it is believed that one skilled in the art can, using the preceding description, utilize the present invention to its fullest extent. The following specific examples are, therefore, to be construed as merely illustrative, and not limitative of the remainder of the disclosure in any way whatsoever.

### General Procedure for Preparing Clear Castings

Several clear casting plaques are prepared for testing as substrates of different coating compositions. Same or at least similar testing results are expected if a particulate substrate is used since the testing is directed to the toughness of the coating and a plaque substrate is easier to handle during the testing. A homogenized monomer mixture containing a resin and curing agent is first prepared. The mixture is then heated and poured into 8 oz. (225 grams) glass, capped, and placed in an IEC Centra-8 centrifuge (International Equipment Co.) and degassed at 1500 rpm for 3 minutes. The degassed liquid is then poured into the pre-heated mold and cured. A 6" x 6" x ⅛" (15 cm x 15 cm x 0.3 cm) plaque is cast for each sample.

### General Procedure for Preparing Coating Compositions

Seven (7) different coating compositions are prepared using the following proportions. Compositions of Examples 2, 4, 6 and 7 include a toughening agent. Compositions of Examples 1, 3, 5 do not include a toughening agent and are prepared for comparison purposes.

| **Example 1** | |
|---|---|
| Raw Materials | Weight % |
| D.E.R.* 331 epoxy resin | 88.3 |
| D.E.H.* 26 amine hardener | 11.7 |
| | |

| **Example 2** | |
|---|---|
| Raw Materials | Weight % |
| D.E.R. 331 epoxy resin | 84.2 |
| D.E.H. 26 amine hardener | 11.4 |
| KANE ACE** MX-11TToughening Agen | 4.4 |
| | |

| **Example 3** | |
|---|---|
| Raw Materials | Weight % |
| D.E.R. 324 epoxy resin | 90 |
| D.E.H. 24 amine hardener | 10 |
| | |

| **Example 4** | |
|---|---|
| Raw Materials | Weight % |
| XU 19110 epoxy resin¹ | 88.5 |
| D.E.H. 26 amine hardener | 11.1 |
| | |

| **Example 5** | |
|---|---|
| Raw Materials | Weight % |
| D.E.R. 383 | 81 |
| Ancamine® 2450 amine hardener | 19 |
| | |

| **Example 6** | |
|---|---|
| Raw Materials | Weight % |
| D.E.R. 383 epoxy resin | 77.9 |
| Ancamine 2450 amine hardener | 18 |
| KANE ACE** MX-117Toughening Agent | 4.1 |
| | |

| **Example 7** | |
|---|---|
| Raw Materials | Weight % |
| XU 19110 epoxy resin¹ | 81.1 |
| Ancamine 2450 amine hardener | 18.9 |

| | |
|---|---|
| * Trademark of Dow Chemical Company ® Trademark of Air products ** Trademark of Kaneka Corporation ¹ XU 19110 epoxy resin contains 5% amphibitic block copolymer Note: Examples 1, 3, 5 are comparative Examples and are not Examples of the Present Invention. | |

### Test Procedures

### Glass Transition Temperature

"Tg or Glass Transition Temperature" means the temperature at which a thermosetting polymer changes from being a glassy solid to a rubbery solid (modulus changing from 1-3 GPa to around 1-5 MPa). In typical crosslinked polymers (i.e. thermosets), Tg is the temperature range (depending on molecular weight distribution) over which the modulus of the cured material drops by roughly 2-3 orders of magnitude. Tg is measured using a Dynamic Mechanical Thermal Analyse (DMTA) method. The results of DMTA of plaques with various coating compositions are obtained in torsion mode using a TA Instruments ARES rheometer. A frequency of 1 radian per second is used for the test and each test spans a temperature range of 25 to 250 °C. Rectangular bars are first cut on a band saw and then brought to its final dimensions using a fine-tooth burr on a vertical TensilKut router. Data related to storage and loss modulus, tan delta and torque are recorded for analysis.

### Tensile Testing

Tensile Strength is the stress carried by a body prior to rupture or break. Typically this stress is calculated by dividing the measured load by the undeformed cross sectional area carrying the load. Quasi-static tensile tests are run on Type I dog-bone specimens in accordance with ASTM D-638. The specimens are cut into rectangular strips on a circular wet saw and then brought to dog-bone geometry using a TensilKut router. In an attempt to minimize scatter in the data caused by defects, the edges are wet-sanded using a series of graded grit sand papers 360, 600, 800 and finally 1200 grit Samples are then gripped using sandpaper as tabs on an Instron electro-mechanical test frame leaving a gage section of 2 inch (5 cm) and tested at a prescribed displacement rate of 0.2 inches (0.5 cm/minute) An extensiometer is used to measure strain. Load, stroke and strain signals are recorded using a computer controlled data acquisition system. All tests are performed at standard room temperature conditions.

### Fracture Toughness (K_{1C})

Fracture Toughness (or K_{1C}) is a measure of the material's resistance under stress to the propagation of an incipient flaw. Casting specimens are tested for Mode I fracture toughness using the compact tension specimen geometry in accordance with ASTM D-5045. Samples are cut to dimension by Hydrocut Company, Angleton, Texas, on their water jet-cutter. Water jet cutting is used because the material is brittle and cracked during conventional mechanical cutting methods. This technique also results in almost no residual stresses in the specimen, a feature that tends to exist while using conventional machining operations. A starter crack is very carefully introduced using a blade that is gently tapped into the chevron notch in the specimen at room temperature (about 25 °C). Specimens in which the crack is either too long across the width of the specimen or twisted to any one side are not tested. Specimens are loaded on a servo-hydraulic Instron test frame by means of a clamp and dowel pin and loaded at a constant displacement rate. Load and stroke data are recorded during the test using the computer controlled data acquisition system. Around 5-8 specimens are tested for each resin casting.

### Test Results

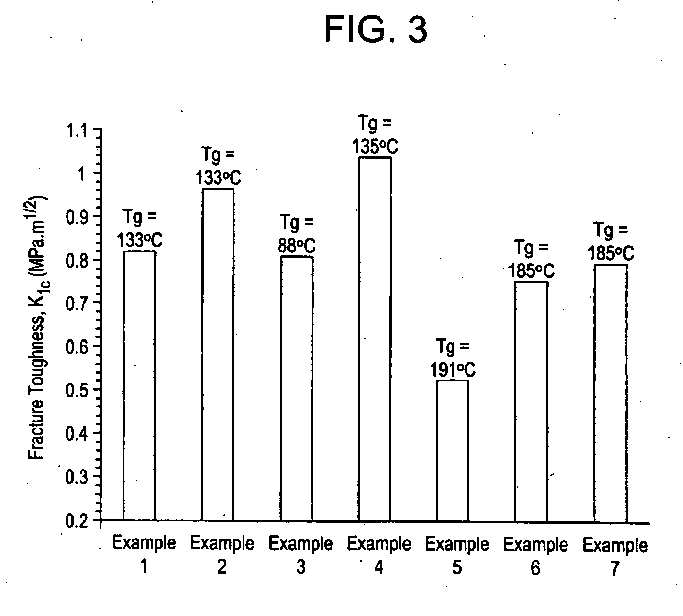

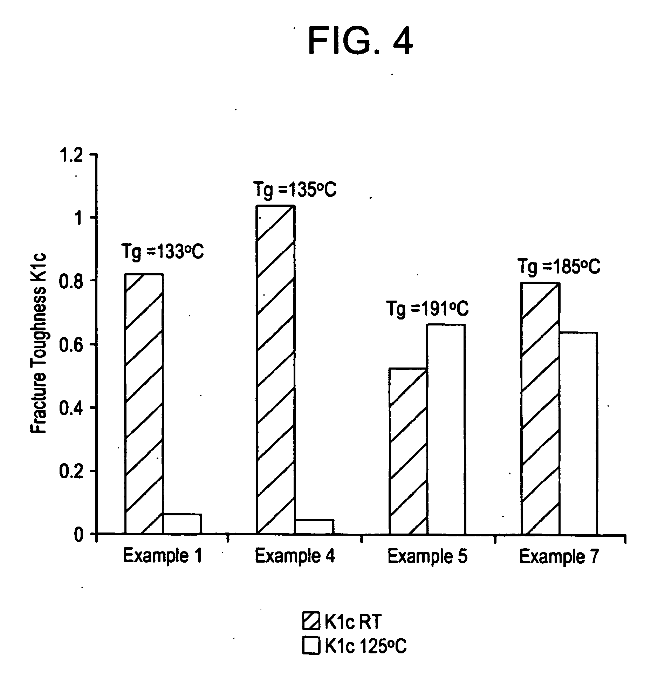

All data is graphically shown in Figure 3 and Figure 4 and summarized in Tables 1 and 2 below.

Fracture Toughness and Glass Transition Temperature for the various examples are shown in Table 1. Examples 2 and 4 contain toughening agents and the fracture data clearly showing improved toughness for these systems (higher K_{1C}) compared to that without the toughening agent (e.g. Example 1).

The epoxy resin of Examples 5, 6, and 7 are high Tg systems and all cured with a cycloaliphatic amine. Example 5 does not have any toughening agent in the formulation and Examples 6 and 7 contain toughening agent. The K_{1C} data clearly shows improved toughness for Examples 6 and 7 (higher K_{1C}) over that of Example 5.

Example 3 is the one with the lowest Tg and has a high fracture toughness even without the presence of any toughening agent. It is relatively easy to achieve high fracture toughness at lower values of Tg below 100°C. The challenge for the present invention is to have high fracture toughness at Tg value of greater than 100°C or even better at greater than 150°C. The lower Tg material of less than 100°C even though are tougher will fail catastrophically at the applications temperature of 125°C and above.

**Table 1: Room temperature fracture toughness and Tg**

| **Coatings System** | **K_{1C}** (MPa.m**^{½}**) | **Tg (°C)** |
|---|---|---|
| Example 1 | 0.82 | 133 |
| Example 2 | 0.964 | 133 |
| Example 3 | 0.81 | 88 |
| Example 4 | 1.038 | 135 |
| Example 5 | 0.524 | 191 |
| Example 6 | 0.754 | 185 |
| Example 7 | 0.796 | 185 |

| | | |
|---|---|---|
| Note: Examples 1, 3, 5 are comparative Examples and are not Examples of the Present Invention. | | |

**Table 2: Tensile Testing at Room Temperature (about 25 °C) and at 125°C**

| | Tensile Modulus (ksi) | | Tensile Strength Break/Yield (ksi) | | Tensile Elongation at Break (%) | |
|---|---|---|---|---|---|---|
| | Room Temperature | 125°C | Room Temperature | 125°C | Room Temperature | 125°cm |
| Example 1 | 358.24 | 203.15 | 11.6 | 2.725 | 7.74 | 14.45 |
| Example 2 | 342.6 | 191.12 | 10.45 | 2.06 | 7.17 | 13.722 |
| Example 3 | 358.1 | 258.6 | 8.94 | 0.0572 | 6.04 | 2.32 |

| | | | | | | |
|---|---|---|---|---|---|---|
| Note: Examples 1, and 3 are comparative Examples and are not Examples of the Present Invention. | | | | | | |

The tensile testing data from Table 2 indicates that there is no negative effect of the toughening agent on tensile modulus, tensile strength, and tensile elongation at break. Both Example 1 (without toughening agent) and Example 2 (with toughening agent) have similar tensile properties at room temperature (about 25 °C) and at 125°C.

While the present invention may be susceptible to various modifications and alternative forms, the exemplary embodiments discussed above have been shown by way of example. However, it should again be understood that the invention is not intended to be limited to the particular embodiments disclosed herein. Indeed, the present techniques of the invention are to cover all modifications, equivalents, and alternatives failing within the scope of the invention as defined by the following appended claims.

## Claims

1. A coated proppant comprising a proppant particulate substrate and a coating layer on the proppant particulate substrate; wherein the coating layer is formed from a composition comprising an epoxy resin, a curing agent, an adhesion promoter, and a toughening agent, wherein the toughening agent is a block copolymer comprising an amphiphilic block copolymer having at least one epoxy resin miscible block segment and at least one epoxy resin immiscible block segment; wherein the immiscible block segment comprises at least one polyether structure containing at least one or more alkylene oxide monomer units with at least four carbon atoms.

2. The coated proppant according to claim 1, wherein the particulate substrate comprises one or more of sand, silica particles, ceramic particles, metallic particles, and synthetic organic particles.

3. The coated proppant according to claim 1, wherein the coating layer comprises a cross-linked thermoset resin.

4. The coated proppant according to claim 1, wherein the epoxy resin comprises one or more of a diglycidyl-ether of Bisphenol A epoxy resin, a diglycidyl-ether of Bisphenol F epoxy resin, an epoxy novolac resin or a diglycidyl ether of cycloaliphatic epoxy resin.

5. The coated proppant according to claim 1, wherein the curing agent is one or more of (a) an aliphatic or modified aliphatic amine, (b) aromatic amine, (c) a cycloaliphatic or modified cyclophatic amine, (d) an anhydride, (e) Lewis acid, or (f) a hexamethylenetetramanine compound.

6. The coated proppant according to claim 1, wherein the toughening agent is present in an amount of 1 wt. % to 20 wt. % of the composition.

7. The coated proppant according to claim 1, wherein the coating layer has a glass transition temperature above 100 °C and a fracture toughness (K_{1c}) value of 0.6 MPa. m½ to 1.2 MPa.m^{⅓}.

8. The coated proppant according to claim 1, wherein the composition is cured at a temperature between 50°C to 300°C.

9. The coated proppant according to claim 1, wherein the composition comprises 60 wt. % to 90 wt. % of epoxy resin, 10 wt. % to 25 wt, % of curing agent, and 1 wt % to 20 wt. % of a block copolymer.

10. The coated proppant according to claim 1, wherein the composition further comprises a surfactant

11. The coated proppant according to claim 10, wherein the surfactant is one or more of anionic or nonionic surfactants.

12. The coated proppant according to claim 10, wherein the composition comprises up to 1 wt. % of surfactant.

## Patentansprüche

1. Beschichtetes Stützmittel, das ein partikuläres Stützmittelsubstrat und eine Überzugsschicht auf dem partikulären Stützmittelsubstrat umfasst; wobei die Überzugsschicht aus einer Zusammensetzung gebildet ist, die ein Epoxidharz, ein Härtungsmittel, einen Haftvermittler und einen Schlagfestmacher umfasst, wobei der Schlagfestmacher ein Blockcopolymer ist, das ein amphiphiles Blockcopolymer mit mindestens einem mit Epoxidharz mischbaren Blocksegment und mindestens einem mit Epoxidharz nicht mischbaren Blocksegment umfasst; wobei das nicht mischbare Blocksegment mindestens eine Polyetherstruktur umfasst, die mindestens eine oder mehrere Alkylenoxidmonomereinheiten mit mindestens vier Kohlenstoffatomen enthält.

2. Beschichtetes Stützmittel nach Anspruch 1, wobei das partikuläre Substrat eines oder mehrere von Sand, Silicapartikeln, Keramikpartikeln, Metallpartikeln und synthetischen organischen Partikeln umfasst.

3. Beschichtetes Stützmittel nach Anspruch 1, wobei die Überzugsschicht ein vernetztes warmhärtendes Harz umfasst.

4. Beschichtetes Stützmittel nach Anspruch 1, wobei das Epoxidharz eines oder mehrere von einem Epoxidharz aus Diglycidylether von Bisphenol A, einem Epoxidharz aus Diglycidylether von Bisphenol F, einem Novolak-Epoxidharz oder einem Diglycidylether von cycloaliphatischem Epoxidharz umfasst.

5. Beschichtetes Stützmittel nach Anspruch 1, wobei das Härtungsmittel eines oder mehrere von (a) einem aliphatischen oder modifizierten aliphatischen Amin, (b) einem aromatischen Amin, (c) einem cycloaliphatischen oder modifizierten cycloaliphatischen Amin, (d) einem Anhydrid, (e) einer Lewis-Säure oder (f) einer Hexamethylentetraminverbindung ist.

6. Beschichtetes Stützmittel nach Anspruch 1, wobei der Schlagfestmacher in einer Menge von 1 Gew.-% bis 20 Gew.-% der Zusammensetzung vorliegt.

7. Beschichtetes Stützmittel nach Anspruch 1, wobei die Überzugsschicht eine Glasübergangstemperatur über 100°C und einen Bruchzähigkeitswert (K_{1C}) von 0,6 MPa.m^{½} bis 1,2 MPa.m^{½} besitzt.

8. Beschichtetes Stützmittel nach Anspruch 1, wobei die Zusammensetzung bei einer Temperatur zwischen 50°C und 300°C gehärtet wird.

9. Beschichtetes Stützmittel nach Anspruch 1, wobei die Zusammensetzung 60 Gew.-% bis 90 Gew.-% Epoxidharz, 10 Gew.-% bis 25 Gew.-% Härtungsmittel und 1 Gew.-% bis 20 Gew.-% eines Blockcopolymers umfasst.

10. Beschichtetes Stützmittel nach Anspruch 1, wobei die Zusammensetzung ferner ein Tensid umfasst.

11. Beschichtetes Stützmittel nach Anspruch 10, wobei das Tensid eines oder mehrere von anionischen oder nichtionischen Tensiden ist.

12. Beschichtetes Stützmittel nach Anspruch 10, wobei die Zusammensetzung bis zu 1 Gew.-% Tensid umfasst.

## Revendications

1. Agent de soutènement enrobé, comprenant un substrat en particules d'agent de soutènement et un couche d'enrobage déposée sur le substrat en particules d'agent de soutènement, dans lequel la couche d'enrobage est constituée à partir d'une composition comprenant une résine époxyde, un agent durcisseur, un promoteur d'adhérence et un agent de renforcement, lequel agent de renforcement est un copolymère à blocs comprenant un copolymère amphiphile à blocs qui comporte au moins un segment de bloc miscible avec une résine époxyde et au moins un segment de bloc non miscible avec une résine époxyde, lequel segment de bloc non miscible comporte au moins une structure de type polyéther qui contient au moins un ou plusieurs motifs monomères de type alcanediyl-oxy, doté(s) d'au moins quatre atomes de carbone.

2. Agent de soutènement enrobé, conforme à la revendication 1, dans lequel le substrat en particules comprend l'un ou plusieurs des suivants : sable, particules de silice, particules de céramique, particules métalliques, et particules de matériau organique synthétique.

3. Agent de soutènement enrobé, conforme à la revendication 1, dans lequel la couche d'enrobage comprend une couche thermodurcissable réticulée.

4. Agent de soutènement enrobé, conforme à la revendication 1, dans lequel la résine époxyde comprend l'une ou plusieurs des suivantes : une résine époxyde de type éther diglycidylique de bisphénol A, une résine époxyde de type éther diglycidylique de bisphénol F, une résine époxyde de type novolaque et une résine époxyde de type éther diglycidylique cycloaliphatique.

5. Agent de soutènement enrobé, conforme à la revendication 1, dans lequel l'agent durcisseur est l'un ou plusieurs des suivants :
a) une amine aliphatique, modifiée ou non,
b) une amine aromatique,
c) un amine cycloaliphatique, modifiée ou non,
d) un anhydride,
e) un acide de Lewis,
f) et un composé de type hexaméthylène-tétramine.

6. Agent de soutènement enrobé, conforme à la revendication 1, dans lequel l'agent de renforcement se trouve en une quantité représentant de 1 à 20 % du poids de la composition.

7. Agent de soutènement enrobé, conforme à la revendication 1, dans lequel la couche d'enrobage présente une température de transition vitreuse supérieure à 100 °C et une ténacité à la rupture K_{1C} valant de 0,6 à 1,2 MPa.m^{1/2}_{.}

8. Agent de soutènement enrobé, conforme à la revendication 1, dans lequel on a fait durcir la composition à une température située entre 50 et 300 °C.

9. Agent de soutènement enrobé, conforme à la revendication 1, dans lequel la composition comprend de 60 à 90 % en poids de résine époxyde, de 10 à 25 % en poids d'agent durcisseur, et de 1 à 20 % en poids de copolymère à blocs.

10. Agent de soutènement enrobé, conforme à la revendication 1, dans lequel la composition comprend en outre un tensioactif.

11. Agent de soutènement enrobé, conforme à la revendication 10, dans lequel le tensioactif est un ou plusieurs tensioactifs anioniques ou non ioniques.

12. Agent de soutènement enrobé, conforme à la revendication 10, dans lequel la composition comprend au plus 1 % en poids de tensio actif.
